# EUROPÄISCHE PATENTSCHRIFT

(11) **EP 1 288 435 B1**
(45) Veröffentlichungstag und Bekanntmachung des Hinweises auf die Patenterteilung: **07.06.2006**
(21) Anmeldenummer: 02016841.5
(22) Anmeldetag: 29.07.2002
(51) Int. Cl.: F01D 5/18

(54) **Turbinenschaufel mit zumindest einer Kühlungsöffnung**
Turbine blade with at least one cooling orifice
Aube de turbine avec au moins un orifice de refroidissement

(30) Priorität: 03.09.2001 DE 10143153
(43) Veröffentlichungstag der Anmeldung: 05.03.2003
(73) Patentinhaber: Rolls-Royce Deutschland Ltd & Co KG, 15827 Dahlewitz (DE)
(72) Erfinder: Haselbach, Frank, Dr., 14532 Stahnsdorf (DE)
(74) Vertreter: Hager, Thomas Johannes

(56) Entgegenhaltungen:
- EP-A- 1 262 631
- US-A- 4 705 455
- US-A- 5 941 686
- PATENT ABSTRACTS OF JAPAN vol. 1997, no. 04, 30. April 1997 (1997-04-30) -& JP 08 334003 A (MITSUBISHI HEAVY IND LTD), 17. Dezember 1996 (1996-12-17)
- PATENT ABSTRACTS OF JAPAN vol. 1998, no. 09, 31. Juli 1998 (1998-07-31) -& JP 10 089005 A (TOSHIBA CORP), 7. April 1998 (1998-04-07)

## Beschreibung

Die Erfindung bezieht sich auf eine Turbinenschaufel gemäß dem Oberbegriff des Hauptanspruchs.

Im Einzelnen bezieht sich die Erfindung auf eine Turbinenschaufel für eine Gasturbine mit zumindest einer Kühlungsausnehmung, welche einen Innenraum der Turbinenschaufel mit deren Oberfläche verbindet.

Turbinenschaufeln der beschriebenen Art sind aus dem Stand der Technik in unterschiedlichsten Ausgestaltungsformen bekannt. So zeigen beispielsweise die US-Patente 6,004,100, 6,129,515, 6,243,948, 6,254,333 oder 5,685,971 unterschiedlichste Ausgestaltungsformen von Turbinenschaufeln. Diese können sowohl als Statorschaufeln, als auch als Rotorschaufeln ausgebildet sein. Allen diesen Turbinenschaufeln ist gemeinsam, dass sie einen Innenraum aufweisen, in dem Kühlluft eingeführt wird. Die Kühlluft strömt durch zumindest eine Kühlungsausnehmung an die Oberfläche der Turbinenschaufel und bildet einen Kühlfilm, um die Turbinenschaufel zu kühlen und vor Beschädigungen durch heiße Prozessgase zu schützen.

Eine Verbesserung des Wirkungsgrades des Prozesses von Gasturbinen (Fluggasturbinen oder stationäre Gasturbinen) ist nur noch über eine Erhöhung des Druckverhältnisses oder der Turbineneintrittstemperatur möglich. Da die Turbineneintrittstemperatur (Spitzenprozesstemperatur) heute schon über der Schmelztemperatur der für die Turbinenschaufeln verwendeten Materialien liegen kann, sind zumindest für die erste Stufe einer Hochdruckturbine (Statorschaufeln oder Rotorschaufeln) effiziente Kühlungsmethoden zwingend erforderlich. Hierzu zählt die oben beschriebene Filmkühlung, sh. hier beispielsweise die genannten US-Patentschriften.

Die Kühlluft tritt, wie bereits erwähnt, durch Schlitze oder Bohrungen an der Profil-Oberfläche der Turbinenschaufel aus und erzeugt somit einen Kühlfilm, der sich schützend über das Schaufelprofil legt.

Um eine effektive Kühlung zu bewirken, zeigt der Stand der Technik unterschiedlichste Ausgestaltungsformen derartiger Ausnehmungs- oder Bohrungsgeometrien für die Kühlungsausnehmungen. Es sind Schlitze, einfache zylindrische Bohrungen, sogenannte fan-shaped-Ausnehmungen, sogenannte laid-back oder fan-shaped-laid-back-Bohrungen vorbekannt. Alle diese geometrischen Ausgestaltungen zielen darauf hin, eine möglichst effektive Kühlung (hohe Filmkühleffektivität) bei möglichst geringen aerodynamischen Verlusten zu erzielen.

Als nachteilig erweist es sich beim Stand der Technik, dass ein effizient wirkender Kühlfilm vielfach erst nach einem gewissen Abstand stromab der Mündungsöffnung der Kühlungsausnehmung wieder anliegt bzw. zu einem kontinuierlichen Film wächst. Dieser Abstand kann zwei bis drei Durchmesser der Mündungsöffnung betragen. Auf Grund der Einbringung der Kühlströmung kann auch eine ungewünschte Durchmischung mit der Außenströmung auftreten, wodurch sich die Gastemperatur in dem wandnahen Bereich erhöht. Hierdurch ergibt sich eine schlechtere Kühleffektivität. Weiterhin ist es nachteilig, dass die notwendigen Austrittswinkel der Kühlungsausnehmungen (üblicherweise zwischen 30° und 50° zur Oberfläche zur Turbinenschaufel) unter bestimmten Voraussetzungen zu einem Abheben des Kühlluftfilms führen. Hierdurch wiederum ergeben sich starke aerodynamische Verluste sowie eine schlechte Kühlungseffektivität. Dieser Effekt ist insbesondere bei herkömmlichen parallelen Bohrungen über Ausblaseverhältnisse von 1 ausgeprägt, wobei der eingeblasene Film zunächst von der Oberfläche der Turbinenschaufel abhebt und erst ein bis zwei Mündungsöffnungs-Durchmesser stromab sich wieder anlegt. Zur Überwindung dieser Nachteile wurde vorgeschlagen, sogenannte fan-shaped-Filmkühlungsbohrungen zu verwenden, die bei größeren Ausblaseraten (Größe 1) noch Filmkühleffektivitäten von über 0,3 aufweisen. Derartige fan-shaped-Filmkühlungsbohrungen sind jedoch technisch sehr aufwendig zu erzeugen.

Ein weiterer Nachteil besteht darin, dass die Filmkühlungsbohrungen (Kühlungsausnehmungen) sogenannte Nierenwirbel ausbilden, deren Wirbelstrukturen am Mündungsaustritt (Mündungsöffnung) zu einer ungewollten raschen Vermischung der Kühlluft mit der heißen Außenströmung führen bzw. diese Hochtemperaturströmung an die Oberfläche der Turbinenschaufel transportieren.

Aus der US 5 941 686 A ist eine Lösung vorbekannt, um eine Kühlströmung durch eine Öffnung auszuführen. Dabei ist das zu kühlende Bauteil mit einer Beschichtung versehen. Diese Beschichtung wird aufgebracht, nachdem die Kühlausnehmung gefertigt wurde. Da sich durch das Aufbringen der Beschichtung der Austrittsdurchmesser der Kühlausnehmung ändern kann, sind Maßnahmen vorgesehen, um einen ungehinderten Querschnitt beibehalten zu können.

Die JP 08 334003 A beschreibt die Austritts-Dimensionierung einer parallel zu der zu kühlenden Oberfläche austretenden Kühlluftströmung. Um die Austrittsströmung in geeigneter Weise zu beeinflussen, ist vorgesehen, eine Düse innerhalb des Kühlluftkanals auszubilden.

In der JP 10 089005 A ist die Gestaltung eines Austrittsbereichs einer Kühlluft-Ausnehmung beschrieben. Dabei werden unterschiedliche kegelförmige, sich erweiternde Konstruktionen gezeigt, die mit Strömungsleitelementen versehen sind.

Aus der US 4 705 455 A ist die Austrittsgestaltung einer Kühlausnehmung vorbekannt, wobei ein Diffusor-Bereich und ein Düsenbereich kombiniert sind, um die Strömung entsprechend zu beschleunigen. Diese beiden Bereiche befinde sich innerhalb der Kühlausnehmung, nicht jedoch am eigentlichen Austrittsende.

In der EP 1 262 631 A ist vorgesehen, den Mündungsbereich der Kühlausnehmung in eine rinnen- oder pfannenartige Vertiefung zu legen, um hierdurch nach dem Austritt der Kühlluftströmung die weiteren Strömungsverhältnisse zu beeinflussen.

Der Erfindung liegt die Aufgabe zu Grunde, eine Turbinenschaufel der eingangs genannten Art so weiterzubilden, dass bei einfachem Aufbau und einfacher, kostengünstiger Herstellbarkeit eine effektive und wirksame Kühlung der Oberfläche der Turbinenschaufel erzielt wird.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass eine Mündungsöffnung der Kühlungsausnehmung an ihrem stromab angeordneten Bereich mit einem Wulst versehen ist.

Die erfindungsgemäße Turbinenschaufel zeichnet sich durch eine Reihe erheblicher Vorteile aus.

Durch die Anordnung eines Wulstes an dem stromab angeordneten Bereich der Mündungsöffnung ist es möglich, die KühlStrömung direkt nach Verlassen der Mündungsöffnung sehr effektiv an die Oberfläche der Turbinenschaufel anzulegen. Hierdurch wird eine bessere, verlustarme Umlenkung der Kühlluft erreicht. Es wird die Bildung eines Kühlfilms an der Oberfläche der Turbinenschaufel gefördert.

Ein weiterer Vorteil besteht darin, dass sich insgesamt eine sehr effektive und wirksame Benetzung der Oberfläche der Turbinenschaufel mit einem Kühlfilm der Kühlungsströmung bildet.

Ein weiterer Vorteil der erfindungsgemäßen Ausgestaltung liegt darin, dass aerodynamische Verluste im Bereich der Filmkühlluft reduziert werden.

Es ergibt sich somit ein geringerer Kühlluftverbrauch (Prozessgewinn) auf Grund der höheren Film-Kühleffektivität. Weiterhin ergibt sich ein besserer Turbinenwirkungsgrad auf Grund geringerer Mischungsverluste.

Insgesamt führen die beschriebenen Vorteile weiterhin dazu, dass die Lebensdauer der Turbinenschaufeln erhöht werden kann bzw. dass geringere Anforderungen an das Material der Turbinenschaufel bei gleich bleibenden Kühlluftmassen gestellt werden können.

Bei der Erfindung ist vorgesehen, dass sich der Wulst entlang eines Teils des Umfangs der Mündungsöffnung erstreckt. Hierdurch kann die gesamte, aus der meist ovalen Mündungsöffnung austretende Kühlluft effektiv an die Oberfläche der Turbinenschaufel angelegt werden.

Der Wulst ist nierenförmig ausgebildet, um sowohl in seinem mittleren Bereich, als auch in seinem Randbereich besonders wirksam zu sein.

Als besonders vorteilhaft erweist es sich, daß der Wulst einen gerundeten, in die Mündungsöffnung vorstehenden Querschnittsbereich aufweist.

Der Wulst kann entweder über die Oberfläche der Turbinenschaufel vorstehen oder mit der Oberfläche abschließen.

Insgesamt ist es besonders günstig, daß der Wulst zur Ausbildung eines Coanda-Effekts bei der die Mündungsöffnung verlassenden Strömung an der Oberfläche der Turbinenschaufel ausgebildet ist. Der Coanda-Effekt beschreibt die Eigenschaft von Fluiden (Wasser, Gasen etc.) an gekrümmten Oberflächen zu haften. Durch die beschriebene Ausgestaltung des Wulstes wird dieser Effekt durch die Kühlluft-Strömung erzielt.

Im Folgenden wird die Erfindung anhand eines Ausführungsbeispiels in Verbindung mit der Zeichnung beschrieben. Dabei zeigt:
- Fig. 1: eine schematische Teil-Seitenansicht einer Turbinenschaufel mit Kühlungsausnehmung und erfindungsgemäßen Wulst,
- Fig. 2: eine vergrößerte schematische Ansicht der Darstellung der Fig. 1,
- Fig. 3: eine Draufsicht auf eine Mündungsöffnung in erfindungsgemäßer Ausgestaltung, und
- Fig. 4: eine weitere Darstellung, ähnlich Fig. 3.

In den Figuren ist ein Teilbereich einer Wandung einer Turbinenschaufel 1 dargestellt. Diese weist einen Innenraum 3 auf, durch welchen Kühlluft geleitet wird. Hinsichtlich der Geometrie und der Ausgestaltung der Turbinenschaufel kann auf den Stand der Technik verwiesen werden, beispielsweise auf die o.g. US-Patente.

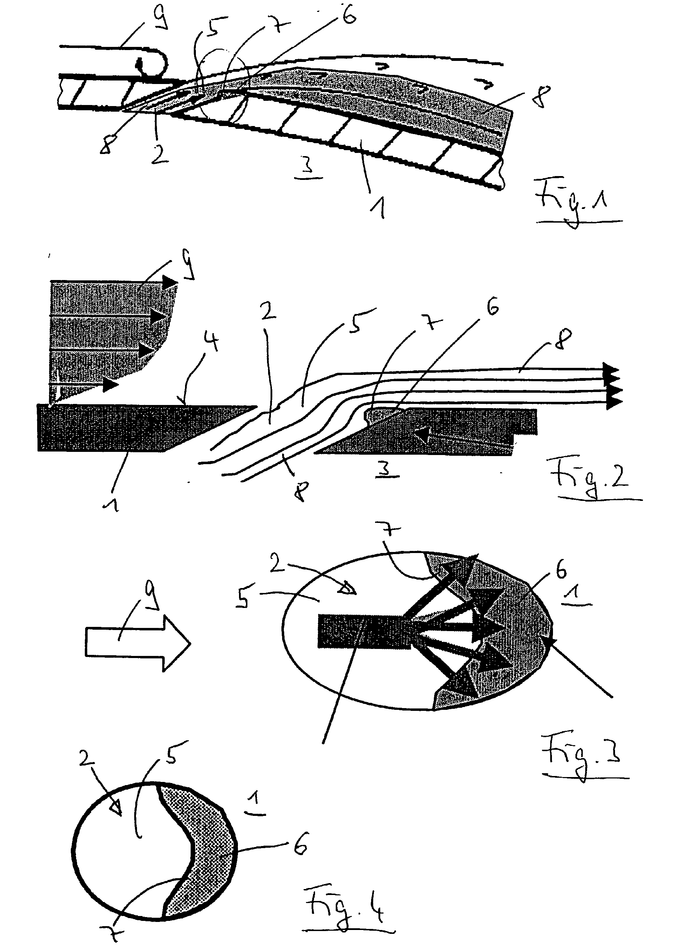

Die Turbinenschaufel 1 weist, wie in Fig. 1 gezeigt, zumindest eine Kühlungsausnehmung 2 auf. Es versteht sich, dass üblicherweise eine Vielzahl derartiger Kühlungsausnehmungen 2 vorgesehen sind, die in bestimmten Anordnungen oder Mustern zueinander ausgebildet sind. Ort, Größe und Ausgestaltung der Kühlungsausnehmung richtet sich nach den jeweiligen Einsatzbedingungen und Geometrien der Turbinenschaufeln.

Die Kühlungsausnehmung 2 mündet mit einer Mündungsöffnung 5 an der Oberfläche 4 der Turbinenschaufel 1. Im Bereich der Mündungsöffnung ist erfindungsgemäß ein Wulst 6 ausgebildet, welcher bevorzugter Weise, wie aus den Fig. 3 und 4 ersichtlich ist, nierenförmig ausgestaltet ist und sich über einen Umfangsbereich der Mündungsöffnung 5 erstreckt. Der Wulst 6 kann bevorzugter Weise einen vorstehenden Querschnittsbereich 7 haben (sh. Fig. 1 und 2).

Durch die Ausgestaltung des Wulstes 6 wird die durch die Kühlungsausnehmung 2 geführte Kühlluftströmung 8 an die Oberfläche 4 der Turbinenschaufel 1 angelegt, so wie dies insbesondere aus Fig. 2 ersichtlich ist.

Mit den Bezugszeichen 9 ist eine Hauptströmung gezeigt, die an der Oberfläche 4 der Turbinenschaufel 1 entlangströmt.

Durch die gezeigte nierenförmige, dreidimensionale Ausgestaltung des Wulstes ergibt sich ein weiterer Vorteil, der darin besteht, dass sogenannte Nierenwirbel, die bei austretenden Jets auftreten können und für einen unerwünschten Heißgaseinzug verantwortlich sind, abgeschwächt oder vermieden werden.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

### Bezugszeichenliste

- 1: Turbinenschaufel
- 2: Kühlungsausnehmung
- 3: Innenraum
- 4: Oberfläche
- 5: Mündungsöffnung
- 6: Wulst
- 7: vorstehender Querschnittsbereich
- 8: Kühlluft-Strömung
- 9: Hauptströmung

## Patentansprüche

1. Turbinenschaufel für eine Gasturbine mit zumindest einer Kühlungsausnehmung (2), welche einen Innenraum (3) der Turbinenschaufel (1) mit deren Oberfläche (4) verbindet, wobei eine Mündungsöffnung (5) der Kühlungsausnehmung (2) an ihrem stromab angeordneten Bereich mit einem Wulst (6) versehen ist, welcher einen gerundeten, in die Mündungsöffnung (5) vorstehenden Querschnittsbereich (7) aufweist, **dadurch gekennzeichnet, dass** der Wulst (6) nierenförmig ausgebildet ist und sich entlang eines Teils des Umfangs der Mündungsöffnung (5) zur Ausbildung eines Coanda-Effekts bei der die Mündungsöffnung (5) verlassenden Strömung (8) an der Oberfläche (4) der Turbinenschaufel (1) erstreckt.

2. Turbinenschaufel nach Anspruch 1, **dadurch gekennzeichnet, dass** der Wulst (6) nicht über die Oberfläche (4) der Turbinenschaufel (1) vorsteht.

3. Turbinenschaufel nach Anspruch 1, **dadurch gekennzeichnet, dass** der Wulst (6) über die Oberfläche (4) der Turbinenschaufel (1) vorsteht.

## Claims

1. Turbine blade for a gas turbine with at least one cooling orifice (2) which connects an interior (3) of the turbine blade (1) with its surface (4), with a mouth (5) of the cooling orifice (2) being provided with a protrusion (6) in its downstream area, which features a rounded cross-sectional area (7) projecting into the mouth (5), **characterized in that** the protrusion (6) is kidney-shaped and extends along part of the circumference of the mouth (5) on the surface (4) of the turbine blade (1) to impart a Coanda effect to the cooling air flow (8) issuing from the mouth (5).

2. Turbine blade in accordance with Claim 1, **characterized in that** the protrusion (6) does not extend beyond the surface (4) of the turbine blade (1).

3. Turbine blade in accordance with Claim 1, **characterized in that** the protrusion (6) extends beyond the surface (4) of the turbine blade (1).

## Revendications

1. Aube de turbine pour une turbine à gaz avec au moins un orifice de refroidissement (2) qui relie à sa surface (4) un espace intérieur (3) de l'aube de turbine (1), sachant qu'une bouche (5) de l'orifice de refroidissement (2) est munie dans sa zone aval d'un bourrelet (6) présentant une zone de section transversale (7) arrondie qui fait saillie dans la bouche (5) de l'orifice, **caractérisée en ce que** le bourrelet (6) est réniforme et s'étend le long d'une partie de la circonférence de la bouche (5) de l'orifice pour provoquer un effet Coanda dans le flux (8) sortant de la bouche (5) de l'orifice sur la surface (4) de l'aube de turbine (1).

2. Aube de turbine selon la revendication nº 1, **caractérisée en ce que** le bourrelet (6) ne fait pas saillie sur la surface (4) de l'aube de turbine (1).

3. Aube de turbine selon la revendication nº 1, **caractérisée en ce que** le bourrelet (6) fait saillie sur la surface (4) de l'aube de turbine (1).
